# EUROPEAN PATENT APPLICATION

(11) **EP 1 672 908 A1**
(43) Date of publication of application: **21.06.2006**
(21) Application number: 05257100.7
(22) Date of filing: 17.11.2005
(51) Int. Cl.: H04N 1/407

(54) **Digital camera for producing positive images from negatives**

(30) Priority: 15.12.2004 US 12915
(71) Applicant: OmniVision Technologies, Inc., Sunnyvale, California 94089 (US)
(72) Inventor: Wu, Raymond, Saratoga CA 95070 (US)
(74) Representative: Hackney, Nigel John

(57) **Abstract**

The embodiments of the invention relate generally to digital cameras, such as still or video cameras, and more particularly relate to digital camera systems for positive image reproduction from negative films or images. It eliminates the need for conventional scanners by allowing a digital camera operator to also make positive images from negatives. In various embodiments of the invention, either the user sets up the camera for acquisition of a negative image, or the camera automatically recognizes a negative image and configures itself accordingly. The camera system's processing facility subsequently transforms the acquired image data to positive image data for storage, printing, and/or display. In some embodiments, a user may assist the transformation of the negative data to positive data and/or further adjust the results of an automatic transformation.

## Description

The embodiments of this invention relate generally to digital cameras, and more particularly, relate to digital camera systems for positive image reproduction from negatives.

Systems are known in the art and those commercially available that can scan slides, photos, and negatives to display the images on a screen, such as a computer screen, and/or to print them. Many photo scanners in the market not only convert existing photographs to digital images, but also convert slides and negatives. Usually the user merely inserts a slide, a photograph, or a negative into the photo scanner and the scanner employs its software to display a preview scan on a screen for the user to either approve or to alter before printing the final image.

Despite varying makeup of conventional photographic films among manufacturers, all color photographic films have certain common characteristics. For example, the colors in the photographs developed from such films are generally composed of the three basic colors red, blue, and green (RBG), which, in various combinations, create the full spectrum of colors. However, if operating without user intervention, many of the digital film scanning systems are less robust than the analog systems they replace. One reason is that, unlike the analog systems, they cannot sense the film type automatically. These scanners only produce the best results when the user provides them with the film type. This requires considerable expertise on the part of the user, in addition to an interface, such as a computer interface, for entering the information. Therefore, the scanner cannot easily be a standalone device.

Most conventional color photographic film scanners also require the user to manually set the scanner for positive or negative films, typically by using a switch or button for setting the scanner to either a positive or a negative scanning mode. If the positive or negative film type is not correctly set by the user, the scanner will not suitably read the film, which will adversely affect the scanner output.

As film scanners have assumed an increasingly important role in graphic image processing, various solutions have been proposed for printing from a negative or slide using a scanner. Users have realized the importance of scanners with high image quality, demanding both image clarity and true color representation. Some solutions for printing images from negatives have employed computers, special software, and printers, to allow a user to scan a negative film or a slide and manipulate the image to a satisfactory output size and color.

If a person simply wants to provide a reprint of an image to a friend, the existing complex techniques and expensive systems are impractical choices. While today most people do not own or have access to film scanners, many own and use digital cameras. With the ease of operation and the simplicity of print reproduction and distribution, digital cameras are becoming as popular as cellular phones. It is very desirable to be able to take positive pictures from negative films or slides with one's digital camera.

In a first aspect, the present invention provides a digital camera system according to Claim 1. Other aspects will be apparent from the attached claims.

### BRIEF DESCRIPTION OF THE DRAWINGS

Figure 1 is a schematic diagram of basic elements of a positive-from-negative image reproduction system, in accordance with an embodiment of the invention.
Figure 2 is a simplified schematic diagram of a digital camera system for positive-from-negative image reproduction, in accordance with an embodiment of the invention.
Figure 3 is a simplified schematic diagram of processes performed in a digital camera system for positive-from-negative image reproduction, in accordance with an embodiment of the invention.

### DETAILED DESCRIPTION

In the following description, several specific details are presented to provide a thorough understanding of the embodiments of the invention. One skilled in the relevant art will recognize, however, that the invention can be practiced without one or more of the specific details, or in combination with or with other components, etc. In other instances, well-known implementations or operations are not shown or described in detail to avoid obscuring aspects of various embodiments of the invention. Even though different aspects of this invention are mostly presented in the context of digital still cameras, they can be applied to any digital image capturing system and apparatus, and the description of the invention is not intended to limit its applicability to any particular field of usage.

The terminology used in the description presented below is intended to be interpreted in its broadest reasonable manner, even though it is being used in conjunction with a detailed description of certain specific embodiments of the invention. Certain terms may even be emphasized below; however, any terminology intended to be interpreted in any restricted manner will be overtly and specifically defined as such in this Detailed Description section.

Reference throughout the specification to "one embodiment" or "an embodiment" means that a particular feature, structure, implementation, or characteristic described in connection with the embodiment is included in at least one embodiment of the present invention. Thus, uses of the phrases "in one embodiment" or "in an embodiment" in various places throughout the specification are not necessarily all referring to the same embodiment. Furthermore, the particular features, structures, implementation, or characteristics may be combined in any suitable manner in one or more embodiments.

Embodiments of the invention relate generally to digital cameras, such as still or video cameras, and more particularly relate to digital camera systems for positive image reproduction from negatives. It eliminates the need for conventional scanners by allowing a digital camera operator to also make positive images from negative films and images. In various embodiments of the invention, either the user sets up the camera for acquisition of a negative image, or the camera automatically recognizes a negative image and configures itself accordingly. The camera system's processing facility subsequently transforms the acquired image data to positive image data for storage, printing, and/or display. In some embodiments, a user may assist the transformation of the negative data to positive data and/or further adjust the results of an automatic transformation.

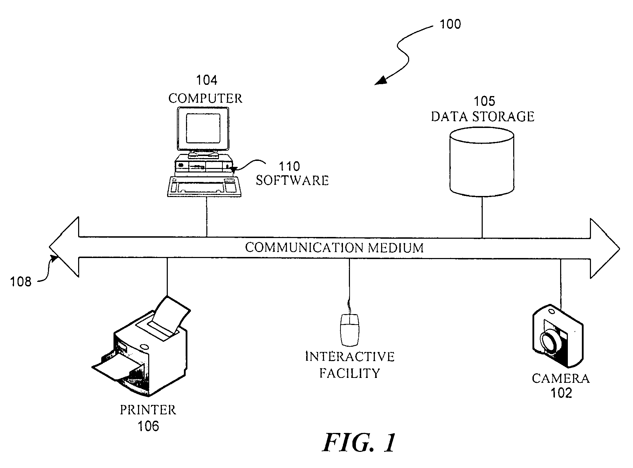

Figure 1 is a schematic diagram of the basic elements of an embodiment of a positive-from-negative image reproduction system 100 using a digital camera 102. The positive-from-negative image reproduction system 100 may comprise seven basic components: a digital camera 102, a localized or distributed processing facility 104, localized or distributed memory 105, a printer 106, a communication medium 108, and localized or distributed software 110. It is important to note that in some embodiments of this invention a part or all of the elements of Figure 1 reside within the digital camera 102.

As far as technical aspects of capturing an image and transforming it to digital data are concerned, the digital camera 102 is similar to a typical commercially available digital camera. For example, the image of an object is focused by a lens on a two-dimensional array of CCDs (Charged Coupled Devices, also known as pixels) that produce an electrical charge when exposed to light. The analog signals generated by CCDs are converted to digital data, such as by Analog-to-Digital converters, for storage, display, processing, and/or printing. In case of color image recording every three or four neighboring CCDs make up a pixel and separately record the intensity of the red, blue, and green (RBG) components of the image light for subsequent recreation of the color image.

However, in different embodiments of the invention additional control and/or data/signal processing facilities provide the camera with the capability to recognize a negative image and to process it accordingly. In these embodiments the control, the data recognition, or data processing and manipulation may be performed either by the digital camera 102, a computer 112, the printer 106, or by any combination thereof.

In one embodiment the processing facility 104 is a microprocessor or any integrated processor such as a logic array localized within the digital camera 102. In another embodiment the processing facility 104 is a computer 112, such as a laptop computer. In yet another embodiment the processing facility 104 is the combination of an internal processing unit within the digital camera 102 and a computer 112.

In one embodiment of the invention the user manually sets the camera to negative mode, wherein the camera adjusts its timing and other parameters for acquiring a negative image. In this mode the user may also specify the particular film type or manufacturer for a more precise parameter adjustment. In another embodiment the negative image is acquired as if it is a positive image; however, later the image data will be either recognized by the user as a negative image and manipulated manually or automatically recognized by the processing facility and processed accordingly. In yet another embodiment of the invention, the camera automatically recognizes a negative image and adjusts its parameters before capturing the image.

Under the same illuminating conditions and duration, positive films display balanced chromaticity while negative films display an unbalanced chromaticity with a higher brightness of red. To overcome this problem the exposure time for red, green, and blue colors can be adjusted to create balanced chromaticity of scanned images. In one embodiment the camera performs a pre-scan of the negative image, sampling it to detect a characteristic indicative of a positive or negative image and setting the camera to treat the image as a negative if the color density is within the standard range and to otherwise treat the image as a positive. In one embodiment the image digital information or a combination thereof, may be compared with predetermined values representing standard values. In another embodiment mathematical computations may be employed to evaluate image information.

In another embodiment of the invention the camera has a dedicated sensor device to detect the red, the green, and the blue and to determine, with the help of processing facility, whether the image is positive or negative and adjust the camera parameters accordingly. In yet another embodiment the user can manually override the camera's determination of the image type. Although in several embodiments some parts of the system are shown or described as including discrete components, for an alternate embodiment the discrete embodiments or any of their subsets can be combined into an integral unit.

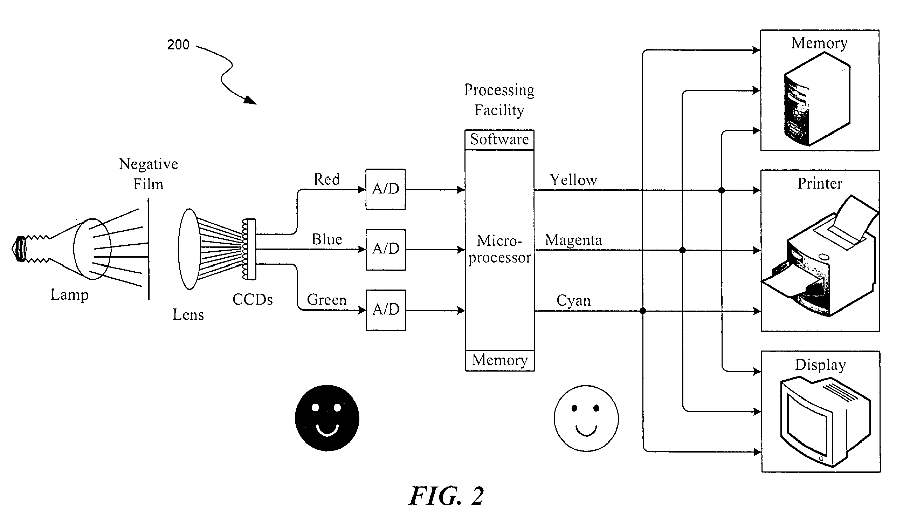

Figure 2 is a simplified schematic diagram of a digital camera system 200 for positive-from-negative image reproduction, in accordance with an embodiment of the invention. The captured RBG pixel information of a negative image undergoes several processes to turn into a positive image. These processes of converting raw samples of a negative image to a positive color image can occur in any part of a localized or a distributed processing facility residing within any of the components of the system or a combination thereof.

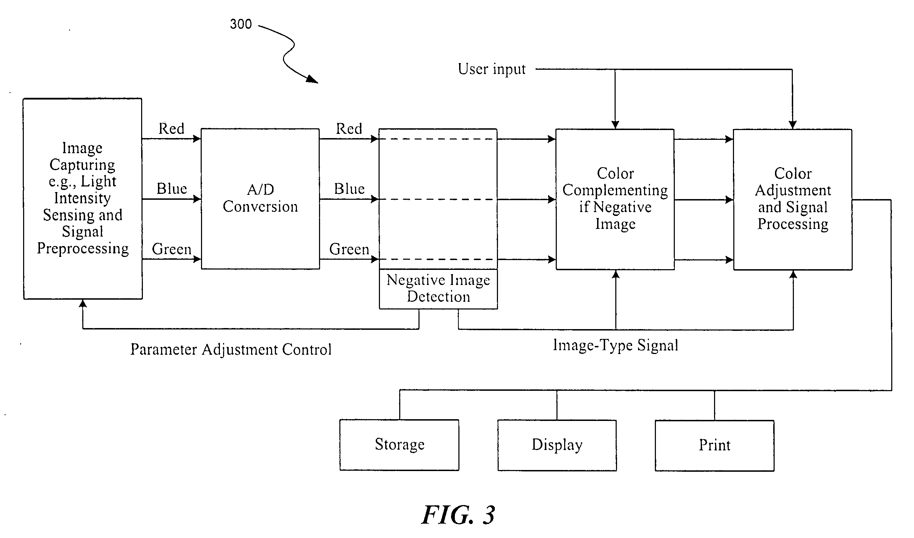

Figure 3 is a simplified schematic diagram of processes performed in a digital camera system for positive-from-negative image reproduction, in accordance with an embodiment of the invention. These processes can be distributed throughout the system with individual portions of the process implemented in separate system components. Moreover, they can be implemented in hardware, software or firmware. For example, the amount of yellow (Y), magenta (M), cyan (C) colors, which are the complementary colors of blue, green, and red, are calculated by the processing facility. In one embodiment these calculations employ mathematical equations whereas in other embodiments look-up tables are used. In yet other embodiments a combination of mathematical equations and look-up tables is employed.

Examples of other possible processes are the gamma correction process for correcting the gradation of each color signal; the masking process for calculating a proper amount of the toner of each color (Y, M, C) required for printing; the UCR process (UnderColor Removal) for adding detail by reducing the amount of magenta, cyan, and yellow in neutral areas and replacing them with black; the dither process for simulating a color that is not part of the current palette on-screen (or in print) by combining pixels of different colors close to each other; and the midtone adjustment for adjusting the medium brightness. It is to be understood that for alternate embodiments different combinations and permutations of these and additional processes can be employed.

In one embodiment the original raw samples of a negative image are represented by 8-bit red, green, and blue components, which typically have maximum value of 255 representing the maximum intensity, and minimum value of 0 representing the minimum intensity. In other embodiments different number of bits may be employed to represent color gradation. For example, in one embodiment of the invention a 30-bit color pixel may be used instead of a 24-bit color pixel, with a maximum value of 1023 instead of 255.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." Additionally, the words "herein," "above," "below," and words of similar import, when used in this application, shall refer to this application as a whole and not to any particular portions of this application. Where the context permits, words in the above Detailed Description using the singular or plural number may also include the plural or singular number respectively. When the claims use the word "or" in reference to a list of two or more items, that word covers all of the following interpretations of the word: any of the items in the list, all of the items in the list, and any combination of the items in the list.

The above detailed description of the embodiments of the invention is not intended to be exhaustive or to limit the invention to the precise form disclosed above nor to the particular field of usage mentioned in this disclosure. While specific embodiments of, and examples for, the invention are described above for illustrative purposes, various equivalent modifications are possible within the scope of the invention, as those skilled in the relevant art will recognize. Also, the teachings of the invention provided herein can be applied to other systems, not necessarily the system described above. The elements and acts of the various embodiments described above can be combined to provide further embodiments.

All of the above patents and applications and other references, including any that may be listed in accompanying filing papers, are incorporated herein by reference. Aspects of the invention can be modified, if necessary, to employ the systems, functions, and concepts of the various references described above to provide yet further embodiments of the invention.

Changes can be made to the invention in light of the above "Detailed Description." While the above description details certain embodiments of the invention and describes the best mode contemplated, no matter how detailed the above appears in text, the invention can be practiced in many ways. Therefore, implementation details may vary considerably while still being encompassed by the invention disclosed herein. As noted above, particular terminology used when describing certain features or aspects of the invention should not be taken to imply that the terminology is being redefined herein to be restricted to any specific characteristics, features, or aspects of the invention with which that terminology is associated. In general, the terms used in the following claims should not be construed to limit the invention to the specific embodiments disclosed in the specification, unless the above Detailed Description section explicitly defines such terms. Accordingly, the actual scope of the invention encompasses not only the disclosed embodiments, but also all equivalent ways of practicing or implementing the invention under the claims.

While certain aspects of the invention are presented below in certain claim forms, the inventors contemplate the various aspects of the invention in any number of claim forms. For example, while only one aspect of the invention is recited as embodied in a computer-readable medium, other aspects may likewise be embodied in a computer-readable medium. Accordingly, the inventors reserve the right to add additional claims after filing the application to pursue such additional claim forms for other aspects of the invention.

## Claims

1. A digital camera system for producing positive images from negative and/or positive images, the digital camera system comprising:
an image capturing resource for capturing an image and producing digital image data;
an image type-recognition facility to detect negative images and/or a mode-setting feature that sets the camera mode for negative images;
a parameter adjustment facility to adjust camera parameters for negative images;
a processing resource for converting negative image data to positive image data;
a memory for storing the image data and/or negative-to-positive data conversion information; and
an interactive user facility.

2. The digital camera system of claim 1, wherein the digital camera is a still or a video camera and the image capturing resource comprises CCDs, and an Analog-to-Digital converter.

3. The digital camera system of claim 1, wherein the image type-recognition facility uses the captured red, green, and blue image data and compares a combination of them to predetermined values or performs mathematical operations on the image data to determine image type, or both.

4. The digital camera system of claim 1, wherein the mode-setting feature is a switch or an option included in a menu.

5. The digital camera system of claim 1, wherein the parameter adjustment facility adjusts exposure time.

6. The digital camera system of claim 1, wherein the processing resource is a microprocessor.

7. The digital camera system of claim 1, wherein the processing facility is a computer.

8. The digital camera system of claim 1, wherein the processing facility is distributed within the camera system.

9. The digital camera system of claim 1, wherein processes for converting negative image data to positive image data comprise any combination of gamma correction process; masking process, UnderColor Removal process, dither process, and midtone adjustment process.

10. The digital camera system as set forth in claim 1, wherein the image type-recognition facility automatically detects a negative image and informs the processing facility, and/or the image type-recognition facility receives its information from a user, including specific information about the negative image such as its manufacturer's name, and wherein the automatic image type-detection can be overridden by the user.

11. The digital camera system as set forth in claim 1, wherein the interactive user facility allows a user to set the system mode according to the image type, to adjust the parameters of the system such as the exposure time, and/or to influence the image conversion processes.

12. A method of producing positive images from negative images using a digital camera system, the method comprising:
capturing an image by a digital camera;
producing digital image data from the captured image;
analyzing the image data to detect negative images;
adjusting parameters of the digital camera for negative images based on detection results or based on an overriding user input;
converting negative image data to positive image data; and
storing or displaying the converted image data.

13. The method of claim 12, wherein the digital camera is a still or a video camera and the image capturing resource comprises CCDs, and an Analog-to-Digital converter.

14. The method of claim 12, wherein the analysis uses captured red, green, and blue image data and compares a combination of them to predetermined values or performs mathematical operations on the image data to determine image type, or both.

15. The method of claim 12, wherein the user input for adjusting parameters is by a switch or an option included in a menu.

16. The method of claim 12, wherein a portion of listed processes are performed in a microprocessor and/or in a computer.

17. The method of claim 12, wherein listed processes are distributed within the camera system.

18. The method of claim 12, wherein converting negative image data to positive image data comprise any combination of gamma correction process; masking process, UnderColor Removal process, dither process, and midtone adjustment process.

19. The method as set forth in claim 12, wherein the system automatically detects a negative image and informs the processing facility, and/or the system receives its information from a user, including specific information about the negative image such as its manufacturer's name, and wherein the automatic detection can be overridden by the user.

20. A digital camera system capable of producing positive images from negative and/or positive images, the camera system comprising:
a digital camera for capturing an image, further comprising a lens, a light intensity sensor, and an Analog-to-Digital data converter;
an image information acquisition facility;
a processing facility for converting a captured negative image to positive image based on the acquired image information, with or without a user's involvement; and
memory for storing an image and/or storing conversion information.
